# EUROPEAN PATENT SPECIFICATION

(11) **EP 1 856 924 B1**
(45) Date of publication and mention of the grant of the patent: **03.12.2008**
(21) Application number: 06706541.7
(22) Date of filing: 01.02.2006
(51) Int. Cl.: H04Q 7/22

(54) **SYSTEM AND METHOD FOR THE TRANSMISSION OF SHORT MESSAGES IN A MIXED WIRELESS AND WIRELINE TELECOMMUNICATION NETWORK**
SYSTEM UND VERFAHREN ZUR ÜEBRTRAGUNG VON KURZNACHRICHTEN IN EINEM GEMISCHT DRAHTLOSEN UND VERDRAHTETEN TELEKOMMUNIKATIONSNETZ
SYSTEME ET PROCEDE DESTINES A LA TRANSMISSION DE MESSAGES COURTS DANS UN RESEAU DE TELECOMMUNICATION HYBRIDE SANS FIL-FILAIRE

(30) Priority: 01.02.2005 EP 05001973
(43) Date of publication of application: 21.11.2007
(73) Proprietor: Nortel Networks Limited, St.Laurent, Québec H4S 29A (CA)
(72) Inventor: MEYER, Christoph, 88090 Immenstaad (DE); CURRIE, Darin, Ottawa, Ontario K1Z 5B6 (CA); ALTWEIN, Thomas, 88090 Immenstaad (DE); STRODEL, Alexander, 88250 Weingarten (DE); LONGMAN, Timothy, F-78000 Versailles (FR); BEICHT, Peter, 88682 Salem (DE)
(74) Representative: Wiebusch, Manfred
(86) International application number: PCT/EP2006/000858
(87) International publication number: WO 2006/082033

(56) References cited:
- EP-A- 0 952 744
- US-A1- 2002 191 757

## Description

The present invention relates to a system and a method for functional addressing and location dependent addressing of short messages in a mixed wireless and wireline telecommunication network such as a Global System for Mobile Communication for Railways (GSM-R) network combined with an Integrated Services Digital Network (ISDN) network.

A system for functional addressing and/or location dependent addressing of short messages in a mixed wireless and wireline telecommunication network according to the preamble of claim and a corresponding method have been disclosed in US 2002/191757 A.

Wireless mobile telecommunication services are now quite commonplace. Several worldwide wireless mobile telephony standards are provided for general public use by way of subscription or similar. Wireless mobile telephony offer many advantages over standard fixed line Plain Old Telephone Services (POTS) telephony systems, the most significant being that the mobile telephone is mobile as such, provided that the use of a particular mobile telephone is made within a region covered by the operator to which a mobile subscriber is connected to.

Specialized mobile communication schemes are also becoming more frequently employed. A number of bodies are defining requirements and standards for utility mobile communication schemes for railway systems. These include the Mobile Radio for Railway Networks in Europe (MORANE) group, a consortium of European railway operators and equipment manufacturer with European Union (EU) funding who are defining a pan-European standard. The MORANE standard specifies extensions to the Global System for Mobile Communications (GSM) standard for application in the railways environment. Another project of specifying requirements or standards in this area is the European Integrated Railway Radio Enhanced Network (EIRENE), coordinated by the European Telecommunications Standards Institute (ETSI). The term GSM-Railways (GSM-R) has been adopted as an umbrella term to cover all railway system schemes. For simplicity, in the description of the prior art and the present invention, reference shall be made to GSM-R systems and in particular to the EIRENE specifications, but it is to be understood that the scope of the claims is not to be limited to such and is applicable to all telecommunication systems and especially wireless mobile telecommunication systems such as GSM/GSM-R and GSM/GSM-R derivative systems which are combined with a wireline telecommunication system such as an ISDN system.

EP 0 952 744 A2 describers a specialized mobile communication scheme, that supports the use of functional numbers.

In a GSM-railway network, communication is required between different user types such as person to person, person to system, system to system in different environments such as on the same train, from train to train, from/to ground to/from train, from ground to ground. The different types of user need to be able to communicate with each other using special railway numbers, i.e. Functional Numbers (FN) which reflect functional information such as the train number the user is on, the function of the train such as goods or passenger, the function of the person who is assigned a particular GSM-R telephone etc. A central register, known as the Functional Home Location Register (HLRf) or Follow Me Functional Node (FFN) stores the functional numbers and their related data. The intention is to enable GSM-R personnel and systems to use the functional number instead of the GSM Mobile Station ISDN (MSISDN) number for dialing and display purposes.

In order for this to work a service called "Follow Me" has been specified, which allows a Mobile Station (MS) user to register a temporarily assigned functional number against a temporarily assigned mobile station, and de-register the association once he no longer requires the functional number or the mobile station. For example when a train operator starts working on a train or in a station, he needs to be able to enter the functional number he has been assigned for the travel or for the day on the particular mobile station he is going to use, and have that association stored in a central register associated with the system. Any calls to the functional number need access to the central register to determine which mobile station the train operator is using and therefore where to route the call. The train operator needs to be able to check the status of the functional number by performing an interrogation sequence, and when the train operator has finished working with his assigned mobile station, he needs to be able to de-register the functional number. Furthermore, the follow-me feature also allows for so-called "static" functional numbers, i.e. functional numbers one cannot register or de- register, for the purpose of being able to look-up an association stored in a central register between the functional number and a mobile station id.

Such GSM-R system includes Mobile Stations (MS) which can not only perform different types of calls, such as voice calls, data calls, but also offer the possibility to do text messaging, i.e. transmit Short Messages (SMs) between respective mobile stations. The specification "EIRENE System Requirements Specification", Version 14, published on October 21, 2003, specifies that, whenever text messaging is implemented in the GSM-R network, the Short Message Service (SMS) - as known for the GSM standard - shall be used (see section 12.2.1). The short message service and short messages are defined in the GSM specification TS 03.40 V7.50: "Technical Realization of the Short Message Service (SMS)", now edited by the 3^{rd} Generation Partnership Project (3GPP) and renumbered 3GPP TS 23.040. In a GSM-R network, the short messages (SMs) are typically transported by using the capabilities of the "Mobile Application Part" (MAP) protocol as specified in the GSM 09.02 specification. The MAP protocol provides a mechanism to transport the messages between the mobile stations and a so-called "Short Message Service Center" (SMSC). According to the GSM SMS specification, a "Service Center" is defined as a function responsible for the relaying and store-and-forwarding of a short message between an Short Message Entity (SME), i.e. an entity which may send or receive Short Messages, and a Mobile Station. Furthermore, an open industry standard protocol, called "Short Message Peer to Peer" (SMPP) protocol, developed by the SMPP Developers Forum, is typically used for the transport between the SMSC and any SMS application server which is connected via a permanent TCP/IP connection.

Short messages can be also transmitted between GSM-R mobile stations using the Functional Addressing (FA) feature in which the functional numbers are used. Such mobile to mobile functional addressed short message processing makes use of the Customized Application for Mobile network Enhanced Logic (CAMEL) Application Part 3 (CAP3) service and associated protocols. The customized application for mobile network enhanced logic is defined in the 3GPP specification 23.078: " Customized Applications for Mobile network Enhanced Logic (CAMEL); Stage 2 ", version 5.8.0, published in July 2004 by the 3GPP (3^{rd} Generation Partnership Project).

There is also the possibility to combine the GSM-R system with an ISDN network to provide a mixed wireline-wireless network in which terminals can be connected via the air interface and via a wireline interface. However, the EIRENE specifications do not specify any transport procedures between a wireless and a wireline telecommunication network.

Several problems arise in mixed wireless and wireline telecommunication networks when transmission of short messages between wireless entities (for example trains) and wireline entities (for example dispatcher terminals) is required. For example, the network can encounter wireless and wireline entities linked in all possible variations using the call forward voice service. However, regular mobile short messages are not forwarded when the voice service has been forwarded. In any case short messages must be delivered to dispatchers on duty regardless if they use wireless or wireline entities, for instance mobile dispatcher phones or fixes line dispatcher phones, respectively.

### Disclosure of the Invention

It is an object of the present invention to provide mixed wireline and wireless telecommunication networks with an improved architecture for the purpose of the transmission of short messages and a process for transmitting short messages.

It is a further object of the present invention to provide a mixed wireline and wireless system with an improved architecture for the purpose of providing wireline originated and/or terminated short messages and a process for transmitting wireline originated and/or terminated short messages.

It is yet a further object of the present invention to provide and a method which allow reliable functional addressing and/or location dependent addressing of short messages in mixed wireless and wireline telecommunication networks.

In more detail, according to a first aspect of the present invention there is provided a system for functional addressing and/or location dependent addressing of short messages in a mixed wireless and wireline telecommunication network, comprising a first network node for receiving a subscriber originated incoming event and for determining whether or not the subscriber originated incoming event is a short message, a second network node for, responsive to the first network node determining that the incoming event is a short message, receiving the short message and converting it to a voice or data communication, and first means for receiving the converted short message, for determining, if the converted short message contains a functional number, whether or not the functional number contained within the converted short message corresponds to a functional number contained within a first database storing predetermined functional numbers in connection with respective call numbers associated with respective fixed subscribers of the mixed wireless and wireline telecommunication network and for replacing the functional number contained within the converted short message by a respective call number associated with a respective fixed subscriber if it is determined that the functional number contained within the converted short message corresponds to a functional number contained within the first database.

According to an embodiment of the present invention respective fixed subscribers are connected to a wireless or wireline part of the mixed wireless and wireline telecommunication network.

According to an further embodiment of the present invention there is provided a second means for determining whether or not a functional number contained within the mobile subscriber originated short message corresponds to a functional number contained within a second database storing predetermined functional numbers in connection with respective call numbers or other functional numbers associated with respective subscribers of the mixed wireless and wireline telecommunication network, for replacing the functional number contained within the short message by a respective call number if it is determined that the functional number contained within the short message corresponds to a functional number contained within the second database in connection with the respective call number associated with a respective subscriber and for replacing the functional number contained within the short message by a respective other functional number if it is determined that the functional number contained within the converted short message corresponds to a functional number contained within the second database in connection with the respective other functional number associated with a respective subscriber.

According to a further embodiment of the present invention the second means is adapted to transmit the short message code containing the respective call number to a subscriber associated therewith and to transmit the short message containing the respective other functional number to the second network node.

According to a further embodiment of the present invention the second means is adapted to perform the determination in accordance with a location information being an information about the location of a specific mobile subscriber within a wireless part of the mixed wireless and wireline telecommunication network.

According to a further embodiment of the present invention the location information is an information about a cell ID of a cell of a wireless part of the mixed wireless and wireline telecommunication network in which the mobile subscriber is located.

According to a further embodiment of the present invention the second means is further adapted to obtain a specific functional number of the specific mobile user indicating the location of the specific mobile subscriber within the mixed wireless and wireline telecommunication network from a call number of the specific mobile subscriber using a predetermined algorithm.

According to a further embodiment of the present invention the second means is further adapted to query an external database by transmitting the specific functional number, the cell ID and a functional number of a fixed subscriber of the mixed wireless and wireline telecommunication network being a call destination to the database and obtaining from the external database an appropriate functional number or an ID, which ID is translated to a call number of an appropriate fixed subscriber within the mixed wireless and wireline telecommunication network, and the second means is further adapted to replace the specific functional number of the fixed subscriber of the mixed wireless and wireline telecommunication network by the obtained appropriate functional number or the translated call number of an appropriate fixed subscriber within the mixed wireless and wireline telecommunication network.

According to a further embodiment of the present invention the second means is further adapted to transmit the short message containing the obtained appropriate functional number to the second network node and to transmit the short message containing the translated call number to the appropriate fixed subscriber within the mixed wireless and wireline telecommunication network.

According to a further embodiment of the present invention the mixed wireless and wireline telecommunication network is a mixed GSM/GSM-R or GSM/GSM-R derivative and ISDN telecommunication network.

According to a further embodiment of the present invention the first network node is mobile switching center, the second network node is short message gateway, the first means is provided within the mobile switching center or a digital multiplex system connected to the short message gateway and the second means is provided within a service control point connected to the mobile switching center and a short message service center.

According to a second aspect of the present invention there is provided a method for functional addressing and/or location dependent addressing of short messages in a mixed wireless and wireline telecommunication network, comprising the steps of receiving a subscriber originated incoming event and determining whether or not the subscriber originated incoming event is a subscriber originated short message, converting the short message to a voice or data communication if it is determined that the incoming event is a short message, determining whether or not the converted short message contains a functional number, determining, if the converted mobile subscriber originated short message contains a functional number, whether or not the functional number contained within the converted short message corresponds to a functional number contained within a first database storing predetermined functional numbers in connection with respective call numbers associated with respective fixed subscribers of the mixed wireless and wireline telecommunication network, and replacing the functional number contained within the converted short message by a respective call number associated with a respective fixed subscriber if it is determined that the functional number contained within the converted short message corresponds to a functional number contained within the first database.

According to an embodiment of the present invention respective fixed subscribers are connected to a wireless or wireline part of the mixed wireless and wireline telecommunication network.

According to a further embodiment of the present invention the method comprises the steps of determining whether or not a functional number contained within the short message corresponds to a functional number contained within a second database storing predetermined functional numbers in connection with respective call numbers or other functional numbers associated with respective subscribers of the mixed wireless and wireline telecommunication network, replacing the functional number contained within the short message by a respective call number if it is determined that the functional number contained within the short message corresponds to a functional number contained within the second database in connection with the respective call number associated with a respective subscriber, and replacing the functional number contained within the short message by a respective other functional number if it is determined that the functional number contained within the converted short message corresponds to a functional number contained within the second database in connection with the respective other functional number associated with a respective subscriber.

According to a further embodiment of the present invention the method comprises the steps of transmitting the short message code containing the respective call number to a subscriber associated therewith, and transmitting the short message containing the respective other functional number to the second network node.

According to a further embodiment of the present invention the method comprises the step of performing the determination in accordance with a location information being an information about the location of a specific mobile subscriber within a wireless part of the mixed wireless and wireline telecommunication network.

According to a further embodiment of the present invention the location information is an information about a cell ID of a cell of a wireless part of the mixed wireless and wireline telecommunication network in which the mobile subscriber is located.

According to a further embodiment of the present invention the method comprises the step of obtaining a specific functional number of the specific mobile user indicating the location of the specific mobile subscriber within the mixed wireless and wireline telecommunication network from a call number of the specific mobile subscriber using a predetermined algorithm.

According to a further embodiment of the present invention the method comprises the steps of querying an external database by transmitting the specific functional number, the cell ID and a functional number of a fixed subscriber of the mixed wireless and wireline telecommunication network being a call destination to the database, obtaining from the external database an appropriate functional number or an ID, which ID is translated to a call number of an appropriate fixed subscriber within the mixed wireless and wireline telecommunication network, and replacing the specific functional number of the fixed subscriber of the mixed wireless and wireline telecommunication network by the obtained appropriate functional number or the translated call number of an appropriate fixed subscriber within the mixed wireless and wireline telecommunication network.

Other embodiments and advantages are described in the detailed description below. This summary does not purport to define the invention. The invention is defined by the claims.

### Brief Description of the Drawings

The accompanying drawings, where like reference numerals indicate like components, illustrate an implementation and an embodiment of the present invention.
Fig. 1 is an overall schematic view of a combination of a wireless GSM-R network and a wireline ISDN network;
Fig. 1a, 1b and 1c are message flow diagrams in case of a SM terminating at a SM-TE connected via a circuit-switch network.
Fig. 1d is a message flow diagram in case of a SM terminating at a SM-TE connected via a Mobile Radio Module.
Fig. 2 is a first simplified illustration of parts of the wireless GSM-R network and the wireline ISDN network;
Fig. 3 is a second simplified illustration of parts of the wireless GSM-R network and the wireline ISDN network;
Fig. 4 is a third simplified illustration of parts of the wireless GSM-R network and the wireline ISDN network;
Fig. 5 is a fourth simplified illustration of parts of the wireless GSM-R network and the wireline ISDN network service control point; and
Fig. 6 is a message flow diagram of the SMPP message flow in the case of a dispatcher originated FN addressed SM.

### Best Mode for carrying out the present Invention

Although the embodiment of the present invention is directed to a GSM-R and ISDN application it should be noted that the present invention is applicable to all telecommunication systems and especially wireless mobile telecommunication systems such as GSM/GSM-R and GSM/GSM-R derivative systems in combination with wireline telecommunication systems such as ISDN systems.

Furthermore, since the GSM-R system is known to the man having ordinary skill in the art the overall structure of this system is not described here and merely differences to the commonly known GSM-R system are described below in further detail. As to further information about GSM-R it is referred to http://eirene.uic.asso.fr/ where more documentation is available online. Therefore, a description of the detailed structure of the GSM-R system is omitted here for the sake of brevity.

As mentioned in the specification "EIRENE System Requirements Specification", Version 14, published on October 21, 2003, the short message service shall be used whenever text messaging is implemented in the GSM-R network. The short message service has been originally developed for common GSM networks but is now used in many different networks, for example a wireline telecommunication network. Since the short message service is well known for the man skilled in the art a detailed description is omitted here.

Among the important features of the embodiment of the present invention are the possibilities to perform Functional Addressing (FA) and/or Location Dependent Addressing (LDA) of short messages (SMs) in a combination of a wireline telecommunication system such as an ISDN system with a wireless telecommunication system such as a GSM-R system. Therefore, emphasis is placed on this feature. In more details, the embodiment of the present invention defines the procedures which allow a Short Message Service Center (SMSC), a Short Message Gateway (SMGW), a Destination Address resolution node such as a GSM-R Service Control Point (GSM-R SCP) and a Short Message Terminal Equipment (SM-TE) to interwork using the Short Message Peer to Peer (SMPP) protocol. In more details, it supports the following functional units: destination address resolution, call forward scenarios between wireless and wireline terminals, end to end delivery confirmation and connection to fixed high speed SMS communication end points.

According to the specification "EIRENE System Requirements Specification", Version 14, published on October 21, 2003, functional addressing (see in particular section 11.3) is related to passing information to provide an association between a subscriber number of a mobile terminal and its functional number. This means that functional addressing is typically used when establishing a call from a fixed terminal to a mobile terminal. Location dependent addressing (see in particular section 11.7 of the above-mentioned specification) is concerned with ensuring that calls from a mobile terminal are routed to a correct destination (i.e. primary controller, secondary controller), based on the current location of the mobile terminal. This means that location dependent addressing is typically used when establishing a call from a mobile terminal to a fixed terminal.

The specification "EIRENE System Requirements Specification", Version 14, published on October 21, 2003, defines so-called "Call Types" (CT) for GSM-R systems to perform functional addressing and location dependent addressing. The call type is a prefix inserted in an EIRENE number which is used to distinguish between different types of user numbers. Some of the predefined call types are defined as follows (see section 9.5.4 of the above-mentioned specification): CT1 is reserved for short codes, CT2 refers to train function numbers, CT3 to engine function numbers, CT4 to coach numbers, CT6 to maintenance and shunting team numbers, CT7 to train controllers, CT8 to mobile subscriber numbers (as for instance MSISDN numbers) and CT9 is reserved for breakout codes. As will be described later in more details, CT1 is used in location dependent addressing and CT9 is used to access the wireline network and refers for instance to ISDN numbers. Call type CT5 is not used in the embodiment of the present invention.

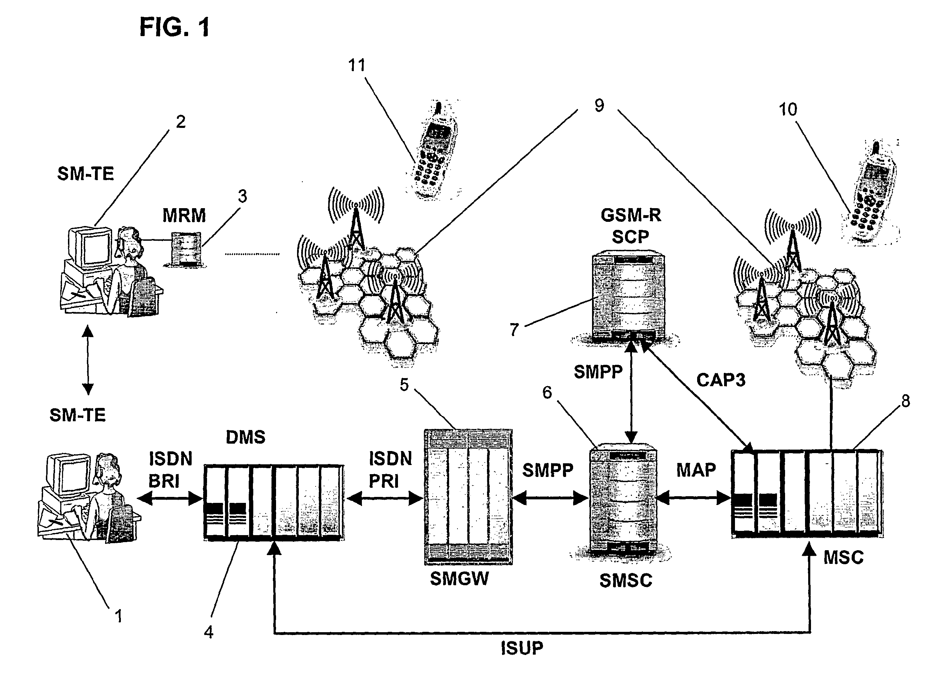

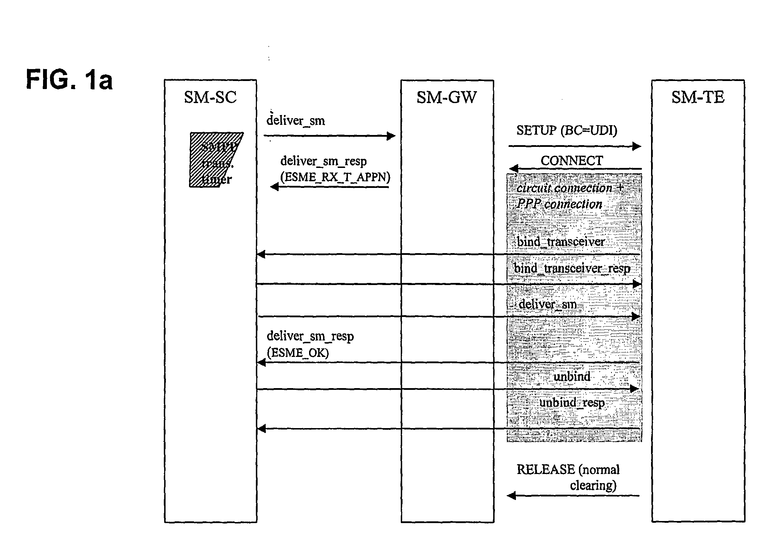

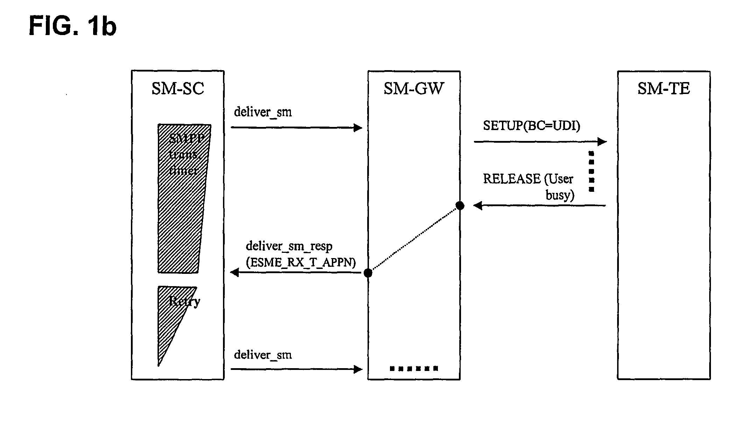

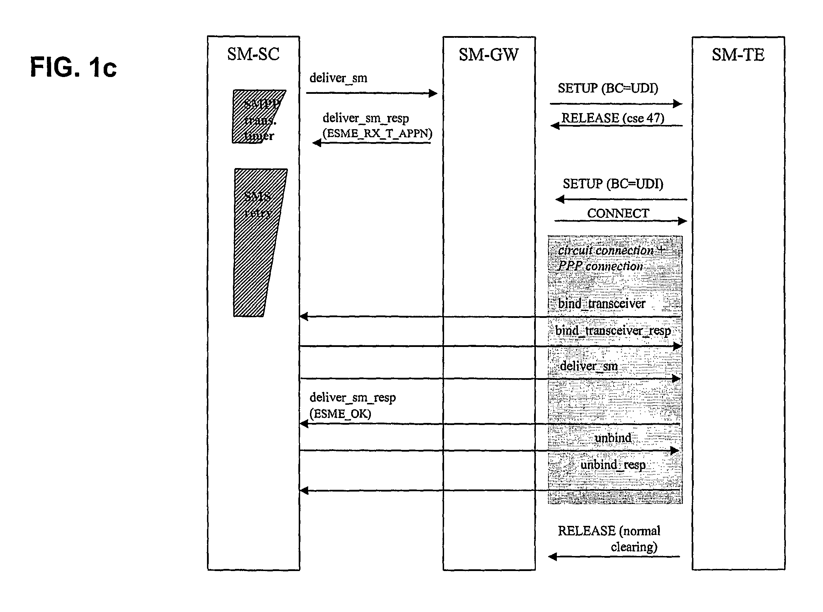

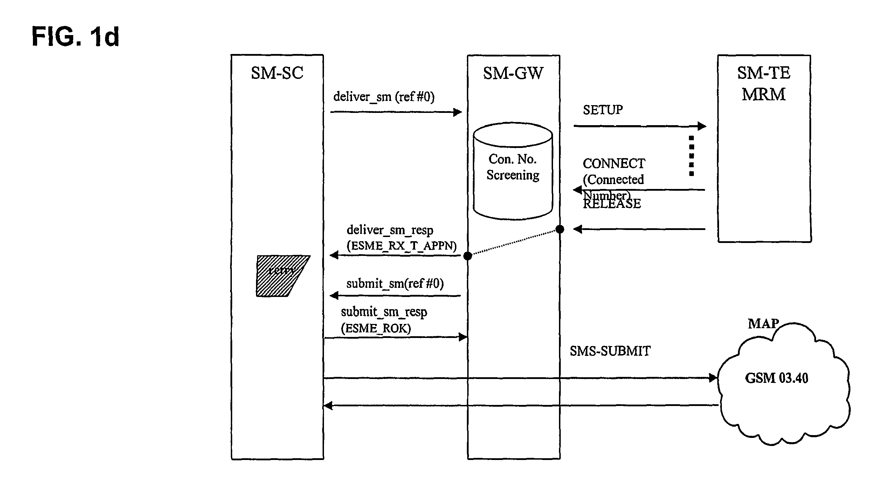

Fig. 1 is an overall schematic view of a combination of a wireless GSM-R network with a wireline ISDN network.

In Fig. 1 reference sign 1 designates a first short message terminal equipment (SM-TE), reference sign 2 designates a second short message terminal equipment, reference sign 3 designates a Mobile Radio Module (MRM), reference sign 4 designates a circuit switching node such as a Digital Multiplex System (DMS), reference sign 5 designates a network node which provides a short message gateway (SMGW) function, reference sign 6 designates a short message service center (SMSC), reference sign 7 designates a GSM-R service control point (SCP), reference sign 8 designates a GSM core network circuit switching node such as a Mobile Switching Center (MSC), reference sign 9 designates respective parts of the wireless GSM-R network, reference sign 10 designates a first mobile terminal and reference sign 11 designates a second mobile terminal.

The first SM-TE 1 is connected to the CS node 4 through a ISDN Basic Rate Interface (BRI) interface. The second short message terminal equipment 2 is connected to the mobile radio module 3 which is in turn connected to the wireless GSM-R radio access network 9 through a wireless interface.

The CS node 4 is connected to the SMGW node 5 via an ISDN Primary Rate Interface (PRI) interface. Although this is not exemplified in figure 1, a plurality of switches could be connected to a single SMGW node 5. The SMGW node 5 is connected to the short message service center 6 via a short message peer to peer (SMPP) protocol interface. The circuit switching node 4 and the mobile switching center 8 are connected via an ISDN User Part (ISUP) protocol.

The short message service center 6 is connected to the mobile switching center 8 via a Mobile Application Part (MAP) protocol interface. The mobile switching center 8 is connected to the wireless GSM-R radio access network 9.

The service control point 7 is connected to the mobile switching center 8 via a Customized Application for Mobile network Enhanced Logic (CAMEL) Application Part 3 (CAP3) protocol. The service control point 7 is also connected to the SMSC 6 via a SMPP interface.

The first and the second mobile terminal 10 and 11 are able to perform communication within the wireless GSM-R radio access network 9 and can also communicate with subscribers within the wireline ISDN network via the wireless GSM-R radio access network 9.

It should be noted that although the first and the second SM-TEs 1 and 2 and the first and second mobile terminals 10 and 11 are shown in Fig. 1 an arbitrary number of SM-TEs and mobile terminals can be used as need arises in a respective application of the embodiment of the present invention.

### System architecture:

There are usually two types of interfaces to a SM-TE: the interface can be an ISDN Basic Rate Interface (BRI) interface in accordance with the European Telecommunications Standard Institute (ETSI) standard as is the case for the first SM-TE 1. In this case, a plurality of first SM-TEs 1 can be connected to one circuit-switch node 4 in a point to multi-point configuration and an arbitrary number of CS nodes 4, connected to a single SM-GW 5, can be used as need arises. The interface can also be a wireless GSM so-called A-interface via the mobile radio module 3 as is the case for the second SM-TE 2. In the first case, for SM communication purposes, the first SM-TE 1 can be in communication with wireless terminals connected to the wireless GSM-R radio access network 9 via the CS mode 4, the SM-GW 5, the SMSC 6 and the MSC 8 with the aid of the SCP 7 as will be described later in more detail. In the second case the second SM-TE 2 is directly connected to the wireless GSM-R radio access network 9. In either case no permanent Internet Protocol (IP) connection is available.

There can also be SM-TEs (for example in a control center) having a permanent internet protocol connection via a separated Remote Access Service (RAS) server, or an internet protocol infrastructure (which does not require a RAS server since there is in such configuration no circuit switching involved) which is the case for instance for a SM-TE connected via a LAN interface.

The invention provides for the SM-GW 5, a new network node that allows the transport of short messages between the wireless GSM-R radio access network 9 and the wireline ISDN network by providing transport services of short messages over circuit switched connections as will be shown in the following in more detail. Besides its remote access server functionality, the SM-GW 5 also provides the function of short message notifications to the SM-TEs 1 connected via a circuit-switched network (e.g. a wireline ISDN network).

The SMGW 5 provides a remote access service (RAS) server function and notifies a SM-TE 1, 2 that a message is waiting at the SMSC 6. The short message gateway is required whenever a SM-TE has no active SMPP connection with the SMSC 6 (such SMPP connection is independent of the underlying transport layers between the SM-TE and the SMSC). Alternatively, in other GSM-R networks, one B-Channel of a SM-TE to a remote access service server could be used instead. In this case, a standard remote access service server should be sufficient and network resources should be planed accordingly. Some short message terminal equipment may have direct LAN connectivity and may not require circuit call connection at all.

According to the invention, the current existing SMSC 6 has been enhanced to support the requirements of short messages in a combination of wireless and wireline telecommunication networks. It should be noted that all short messages are routed to the SMSC 6 and stored therein. The short message service center 6 forwards the stored short message in different manners as described below in accordance with the call type of the short message.

The embodiment of the present invention has been made such that it is applicable in cases where permanent and non permanent short message peer to peer (SMPP) protocol connection to all SM-TEs is provided, where SM-TEs are not staffed and one uses the diversion service Call Forwarding Unconditional (CFU), and where multiple diversions are allowed with a mixture of wireless and wireline SM-TEs.

In the preferred embodiment of the invention, a SMS message should be delivered to the active dispatcher terminal via the SMGW 5. The final destination address is not necessarily known to the SMGW 5, and is a result of switch number translation and call diversion occurrences. The SMGW 5 will establish ISDN data calls (bearer capability = UDI - Unrestricted Digital Information) towards the dispatcher as described below.

### Terminating short messages at a SM-TE connected to the wireline telecommunication network:

For short messages terminating at the first SM-TE equipment 1 connected to the wireline telecommunication network, the mixed wireless and wireline telecommunication network is designed in a way that the number type of destination addresses of short messages arriving at the SMGW 5 can only represent call type CT7 number, i.e. a functional number for a train controller at a special location, a call type CT9 number, i.e. a fixed line destination number of a train controller used for call routing, or an E.164 representation of a wireline dispatcher. CT 1, 2, 3, 4, 6 do not represent final destination addresses and must be translated by another network node (e.g. the SCP 7 as described below). CT 5 numbers are not supported for SMS. CT8 numbers will not be routed to the fixed-line SM-GW 5 directly.

Referring now to Figure 1a, 1b and 1c, shown are flow diagrams showing the message flows in case of a SM terminating at the SM-TE 1. First, the SMSC will check if a dispatcher terminal is bound in for the destination number CT7 or CT9, as the case may be. If the dispatcher terminal is bound, a regular SMPP SM submission is executed. Otherwise, a SMPP "deliver_sm" SM delivery message is transmitted to the SMGW 5. The SMGW 5 acts thereafter as a "External Short Message Entity" (ESME) and, upon reception of the "deliver_sm" SM delivery message, attempts to establish a data call (bearer capability = UDI) with a "SETUP" call setup message towards the SM-TE 1. The SM-TE 1 will recognize the incoming SM call by a preconfigured SMGW 5 root number.

Now described are three different situations that can be encountered:
In the first one, illustrated on Figure 1a, the SM-TE 1 responds to the SMGW 5 with a "CONNECT" call connect message, thus indicating successful UDI call setup. The SM-TE 1 may also respond with an "ALERTING" call alert message as well as a "CONNECT" call connect message.

As long as the SMGW 5 does not discover a non discoverable destination, it responds to the SMPP "deliver_sm" SM delivery message from the SMSC 6 with a SMPP "deliver_sm_resp" response message which carries a "ESME_RX_T_APPN" error status code notification. The ESME_RX_T_APPN error status code returned by the SMGW 5 means that the SMGW 5 as an ESME could not process a delivery due to a temporary problem, and (more importantly) requests that the message be retried at some future point. This shall then force the SMSC 6 to schedule a retry.

The dispatcher terminal SM-TE 1, now having been notified, can bind in to retrieve the waiting message. In order to do so, the SM-TE 1 can either directly connect to the incoming call from the SMGW 5 and establish a SMPP session to the SMSC 6 for message retrieval or can call back later to retrieve a message. The SM-TE 1 generates the address within the bind operation out of the previously received calling identifier in the "Calling Line Identification" (CLI) field in the "SETUP" call setup message from the SMGW 5.

In the second one, illustrated on Figure 1b, the SM-TE 1 responds to the SMGW 5 with a "RELEASE" call release message with a cause id 88, thus indicating failed UDI call setup. The SMGW 5 will then consider the SM message as non deliverable, and respond to the SMSC 6 with a SMPP "deliver_sm_resp" response message which carries an invalid destination address notification ("ESME_RINVDSTADR"). All other release causes will lead the SMGW 5 to respond to the SMSC 6 with a SMPP "deiiver_sm_resp" response message which carries a "ESME_RX_T_APPN" error status code notification which requests a retry from the SMSC 6.

In the third one, the SM-TE 1 answers the incoming UDI call with an "ALERTING" call alert message. The SMGW 5 then waits for a "CONNECT" call connect message in order to receive the connected number (CN) information carried by such a message and reroute the short message.

Once a UDI call is successfully established between the SMGW 5 and the SM-TE 1, the SM-TE 1 will establish a PPP connection towards the SMGW 5. The SMPP protocol can then be used to exchange SMs between the SM-TE 1 and the SMSC 6, as described in the above-mentioned SMPP v3.4 specification. The SM-TE 1 will act as an "External Short Message Entity" (ESME) transceiver in wireline connections, and bind into the SMSC 6 in order to establish a SMPP session. The bind operation is completed according to the SMPP protocol bind operation. It starts with the SMPP binding message "bind_transceiver" from the SM-TE 1, and its response, the SMPP binding response message "bind_transceiver_resp" from the SMSC 6. The SM-TE 1 will derive the destination address used in the SMPP binding message from the received calling identifier in the "Calling Line Identification" (CLI) field in the "SETUP" call setup message from the SMGW 5.

The remaining steps follow the standard GSM SMS delivery procedures.

As long as a dispatcher terminal is bound into the SMSC 6, it can directly receive SMs messages. The SMSC 6 will check on every bind operation it receives, if it has stored messages for the binding address. If messages are found, they will be directly delivered to the dispatcher terminal.

Either side of the connection (SM-TE 1 or SMSC 6) will unbind the connection after the SMPP inactivity timer (SMGW 5 <-> SM-TE 1) expires. When the SM-TE 1 has successfully unbound its SMPP connection and does not need any longer the PPP connection it will release the UDI call. It is the responsibility of the SM-TE 1 to release the call with the SMGW 5.

Figure 1c illustrates the case in which a SM-TE may only poll messages of the SMGW 5 after being notified. In such case the SM-TE will reject the incoming data call from the SMGW 5 with the release cause 47 (Resource unavailable, unspecified).

### Terminating short messages at a SM-TE connected to the wireless telecommunication network:

Referring now to Figure 1d, shown is a flow diagram showing the message flows in case of a SM terminating at the SM-TE 2 connected to the wireless telecommunication network 9 via the mobile radio module (MRM) 3. A SMPP "deliver_sm" SM delivery message is transmitted by the SMSC 6 to the SMGW 5. The SMGW 5 acts thereafter as a "External Short Message Entity" (ESME) and, upon reception of the "deliver_sm" SM delivery message, attempts to establish a data call (bearer capability = UDI) with a "SETUP" message towards the SM-TE 2. The SM-TE 2 cannot, however, establish a PPP connection of an incoming call from the SMGW 5. It will therefore connect, then release the call shortly afterwards, usually before the expiry of the SMGW 5 "SMPP_Wireline_Session_established" timer. The SMGW 5 will still receive the Connected Number (CN) information carried by the call connect "CONNECT" message received from the SM-TE 2. If this number matches to an internal screening table of the SMGW 5, the SMGW 5 will exchange the current SM Destination Address with the received Connected Number and send this number back to the SMSC 6 for delivery via the regular MAP protocol.

The SMGW 5 will use the original user_reference_number reference id, which had been assigned by the SMSC 6 in the SMPP "deliver_sm" SM delivery message, in the SMPP "submit_sm" SM submission message sent back to the SMSC 6. The SMSC 6 will detect the same user_reference_number reference id, and recognize a pending delivery. Consequently, it will stop the retry timer, exchange the destination address with the newly received destination address and send a new deliver message towards the MAP interface.

### Origination short messages:

Regardless of the destination number call type, short messages originating at a short message terminal equipment will always be routed to the short message service center which stores and forwards the short message.

Destination numbers of call type CT5 are not supported for short messages and are for further study, i.e. short messages numbers of call type CT5 must be rejected as undeliverable.

### Functional Addressing and Location Dependent Addressing of SMs:

The specification "EIRENE System Requirements Specification", Version 14, published on October 21, 2003, also defines a so-called ground-train addressing (see paragraph 11.2) which can be divided into two areas: functional addressing of mobile users, and location dependent addressing of fixed network users.

From the aforementioned description of call types it is clear that location dependent addressed short messages terminating at a SM-TE 1, 2 must be of call type CT7 representing train controllers (functional number for train controllers at a specific location). Call type CT8 - for short messages to second SM-TEs 2 connected via the mobile radio module 3 to the wireless GSM-R radio access network 9, and call type CT9 (fixed line destination number of train controller, used for call routing) - for short messages to first SM-TEs 1 connected to the wireline ISDN network via the ISDN BRI interface do not use location dependent addressing, since both call types already contain the ISDN number or the Mobile Station ISDN (MS-ISDN) number of an individual subscriber within the mixed wireless and wireline telecommunication network. A detailed description of these call types is therefore omitted here for the sake of brevity. The same holds true for short messages containing a so-called E.164 representation of a specific subscriber, i.e. national numbers according to the EIRENE specifications.

Furthermore, from the aforementioned description of call types it is clear that functional addressed short messages terminating at a mobile terminal 10 must be initially (i.e. before they are translated into a different call type) of call type CT2, CT3, CT4, or CT6 representing train function numbers, engine function numbers, coach numbers or maintenance and shunting team numbers, respectively. Call type CT8 for mobile subscriber numbers do not use functional addressing since this call type already contains the MS-ISDN number of an individual subscriber within the wireless part of the mixed wireless and wireline telecommunication network. A detailed description of this call type is therefore omitted here for the sake of brevity. The same holds true for short messages containing a so-called E.164 representation of a specific subscriber, i.e. national numbers according to the EIRENE specifications.

Address resolution is required in order to process the functional numbers of the respective call types. Such address resolution is performed at the service control point 7 for call types CT1, CT2, CT3, CT4 and CT6 and is performed at the mobile switching center 8 for call type CT7. More specifically, the service control point 7 stores a database having entries of relations between respective functional numbers of call types CT1, CT2, CT3, CT4 and CT6 and call types CT7, CT8 and CT9. The mobile switching center 8 stores a database having entries of relations between respective functional numbers of call type CT7 and call types CT8 and CT9. These databases will be described later in more detail. However, it should be noted that address resolution can alternatively be performed from call type CT7 to call type CT8 or CT9 at the CS node 4 or at the SCP 7 as the need arises.

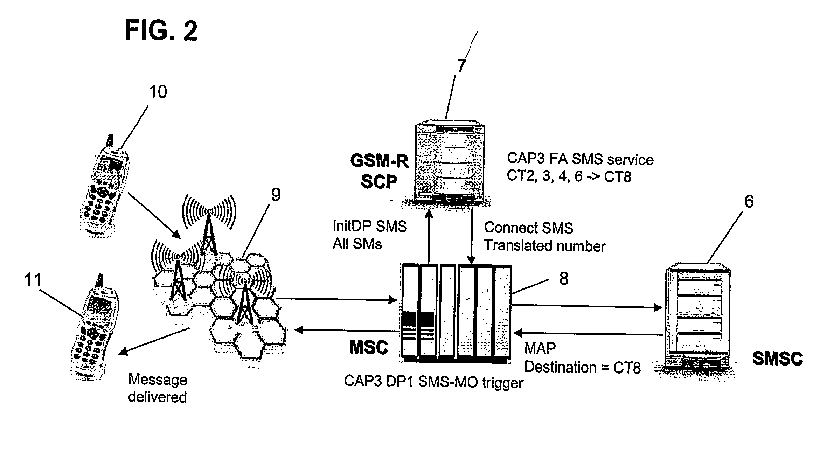

Figures 2 to 6 which will be described below in further detail do not show all of the details of the mixed wireless and wireline telecommunications network but provide an overview of the functional principle of the functional addressing and the location dependent addressing of short messages according to the present invention.

### Mobile originated functional addressing (MO-FA) - Mobile Terminated:

Fig. 2 is a first simplified illustration of parts of the wireless GSM-R network and the wireline ISDN network. This figure is used to describe the processing of a mobile originated functional addressed (MO-FA) short message to a mobile terminal in more detail.

It is now assumed that a functional addressed mobile originated short message of call type CT2, CT3, CT4 or CT6 is generated by the first mobile terminal 10 shown in figure 2 to perform functional addressing to the second mobile terminal 11. This functional addressed mobile originated short message is transmitted to the mobile switching center (MSC) 8 via the wireless GSM-R radio access network 9. The MSC 8 is connected to the service control point (SCP) 7 via the CAP3 protocol and comprises detection means for mobile originated short messages. An example of such detection means can be a so-called detection point (DP) for mobile originated short messages as described in section 4.2 ("Detection Points") of the 3GPP specification TS 23.078. Each mobile originated functional addressed short message therefore triggers at the MSC 8 the generation of a query message sent towards the SCP 7. In a preferred embodiment, the query procedure is a InitialDPSMS procedure as described in the section 12.5 of the 3GPP specification TS 23.078. The destination parameter of the query message carries the functional number of call type CT2, CT3, CT4 or CT6. Alternatively, all short messages or else all mobile originated short messages could trigger at the MSC 8 the generation of a query message sent towards the SCP 7. In such a case, the SCP comprises means for detecting functional addressed short messages and processing the detected functional addressed short messages according to the below described scheme.

The SCP 7 comprises memory means, for instance a database, for storing entries, each of which comprising functional numbers, i.e. CT2, CT3, CT4 or CT6, associated with respective call numbers, i.e. CT8, and being associated with a respective mobile subscriber. Upon reception of the above-mentioned query message from the MSC 8, the SCP 7 translates the functional number contained within the MO-FA short message of type CT2, CT3, CT4 or CT6 into a mobile station integrated service digital network (MS-ISDN) number (of type CT8) by querying the database contained within the service control point 7. If a functional number contained within the MO-FA short message corresponds to a functional number contained within the database the aforementioned translation is performed. The thus obtained MSISDN number being CT8 is transmitted to the MSC 8 and replaces the functional number contained within the initial MO-FA short message to thereby create a short message which can be handled as a traditional short message as described in the 3GPP TS 03.40 specification. In a preferred embodiment, the SCP 7 response follows a "ConnectSMS" procedure as described in the section 12.1 of the 3GPP specification TS 23.078. The destination subscriber number parameter in the response message contains a MS-ISDN number of call type CT8 or CT9 which serves as a destination address to which the short message shall be routed by the SMSC 6.

The short message is then transmitted to the short message service center (SMSC) 6 where it is stored and is furthermore forwarded if there is the possibility to transmit the short message to the subscriber associated to the MS-ISDN number being CT8 contained in the short message. The short message is transmitted to the MSC 8 and delivered to the second mobile terminal 11.

### Cell based mobile originated location dependent addressing (MO-LDA):

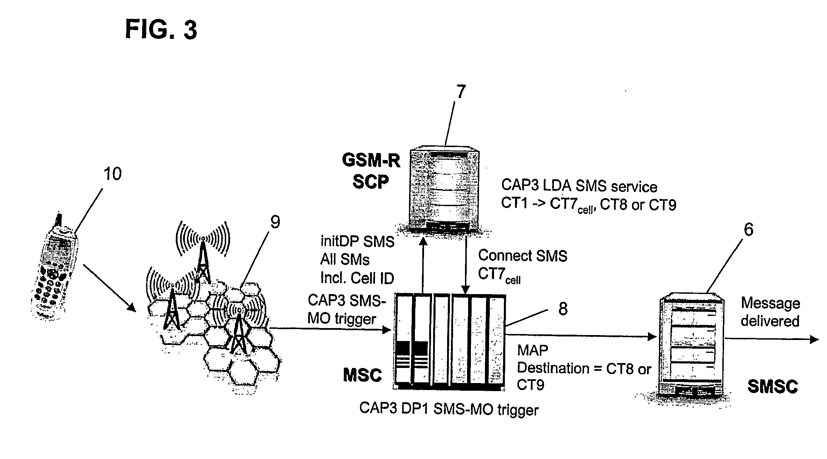

Fig. 3 is a second simplified illustration of parts of the wireless GSM-R network and the wireline ISDN network. This figure is used to describe the processing of a mobile originated location dependent addressed (MO-LDA) short message in more detail.

Location dependent addressing also uses call type CT1 which is reserved for short codes. Since these short codes are well known and also described in the specification "EIRENE System Requirements Specification", Version 14, published on October 21, 2003 (see section 9.8), a detailed description of the call type CT1 and the respective short codes is omitted here.

It is now assumed that a location dependent addressed mobile originated short message of call type CT1 is generated by the first mobile terminal (MT) 10 shown in Fig. 3 and includes location dependent addressing to the first SM-TE equipment 1 connected to the digital multiplex system 4 via the ISDN basic rate interface or to the second SM-TE 2 connected to the mobile radio module 3. This MO-LDA short message is transmitted to the mobile switching center (MSC) 8 via the wireless GSM-R radio access network 9. The MO-LDA SM body contains location information for the mobile terminal 10 originating the short message such as an identifier of the cell (cell ID) in which said MT is located. The MSC 8 is connected to the service control point (SCP) 7 via the CAP3 protocol and comprises detection means for mobile originated short messages. An example of such detection means can be a so-called detection point (DP) for mobile originated short messages as described in section 4.2 ("Detection Points") of the 3GPP specification TS 23.078. Each location dependent addressed short message therefore triggers at the MSC 8 the generation of a query message sent towards the SCP 7. In a preferred embodiment, the query procedure is a InitialDPSMS procedure as described in the section 12.5 of the 3GPP specification TS 23.078. The query message carries the LDA number of call type CT1 as well as location information for the mobile terminal 10 contained in the initial SM body such as the identifier of the cell (cell ID) in which the mobile terminal originating the SM is located. Alternatively, all short messages or else all mobile originated short messages trigger at the MSC 8 the generation of a query message sent towards the SCP 7. In such a case, the SCP comprises means for detecting location dependent addressed short messages and processing the detected location dependent addressed short messages according to the below described scheme.

The SCP 7 comprises memory means, for instance a database, for storing entries of relations between respective functional numbers of call type CT1 and respective functional numbers of call types CT7, CT8 or CT9. The above-mentioned MT location information is used to select proper functional numbers of call type CT7, CT8 or CT9 in accordance with the location information for the mobile subscriber originating the location dependent short message. Upon reception of the above-mentioned query message from the MSC 8, the SCP 7 attempts to translate the called party functional number embedded inside the short message to the required called party MSISDN or ISDN number, which may be of either of call types CT9, CT8 or CT7 as the case may be.

### Existing relation between the functional number of call type CT1 and a functional number of call type CT9:

If a relation between the functional number of call type CT1 and a functional number of call type CT9 is stored within the database, the SCP 7 translates the functional number contained within the location dependent addressed mobile originated short message to a required ISDN number of a wireline subscriber by querying the database contained within the SCP 7. The thus obtained ISDN number is transmitted to the MSC 8 and replaces the functional number contained within the location dependent addressed mobile originated short message. The thus modified location dependent addressed short message is transmitted to the SMSC 6 and stored therein, and transmitted to the SM-TE 1 connected to the wireline telecommunication network via the circuit switch node 4 (reference is now made to fig. 1) via the SMGW 5 as described above. In a preferred embodiment, the SCP 7 response follows a "ConnectSMS" procedure as described in the section 12.1 of the 3GPP specification TS 23.078.

### Existing relation between the functional number of call type CT1 and a functional number of call type CT8:

If a relation between the functional number of call type CT1 and a functional number of call type CT8 (MS-ISDN number) is stored within the database, the SCP 7 translates the functional number contained within the location dependent addressed mobile originated short message to a required mobile MSISDN number of a wireless subscriber by querying a database contained within the SCP 7. The thus obtained MSISDN number is transmitted to the MSC 8 and replaces the functional number contained within the location dependent addressed mobile originated short message. The thus modified location dependent addressed short message is transmitted to the SMSC 6 and stored therein, and is transmitted to the SMGW 5 if there is the possibility to transmit the short message to the mobile subscriber associated to the MSISDN number being CT8 contained in the short message. As in the case of the aforementioned mobile originated functional addressing the short message is transmitted to the mobile switching center 8. However, the MSISDN number is not associated to a mobile subscriber but a fixed subscriber being connected to the wireless telecommunication network 9 via the mobile radio module 3. Therefore, the short message is transmitted to the mobile radio module 3 to which the second short message terminal equipment 2 is connected although this is not shown in Fig. 3 for the sake of simplicity and is then transmitted to the second short message terminal equipment 2.

### Existing relation between the functional number of call type CT1 and a functional number of call type CT7:

If a relation between the functional number of call type CT1 and a functional number of call type CT7 is stored within the database, the service control point 7 translates the functional number contained within the location dependent addressed mobile originated short message to a required functional number of call type CT7 by querying the database contained within the service control point 7. The thus obtained functional number of call type CT7 is transmitted to the mobile switching center 8 and replaces the functional number contained within the location dependent addressed mobile originated short message. The thus modified location dependent addressed short message is stored in the mobile switching center 8 and is transmitted to the short message service center 6, is stored therein and is transmitted to the short message gateway 5.

Referring now to figure 1, the SMGW 5 stores the received short message, converts the short message to a communication in the format of a voice or data communication and transmits it to the CS node 4. Because the location dependent addressed short message containing the functional number of call type CT7 cannot be directed to a fixed user the converted call is transmitted back to the MSC 8 via the CS node 4 using the ISUP protocol. The MSC 8 is able to perform conversion of the functional number of call type CT7 to a functional number of call type CT8 or CT9. Furthermore, there is also the possibility that the conversion of the functional number of call type CT7 to a functional number of call type CT8 or CT9 is performed at the SCP 7 or the MSC 8

### Exiting relation between the functional number of call type CT7 and a functional number of call type CT9:

If a relation between the functional number of call type CT7 and a functional number of call type CT9 is stored within the database contained in the MSC 8, the functional number of call type CT7 in the short message is replaced by the functional number of call type CT9 and the modified short message having the functional number of call type CT9 is transmitted to the short message service center 6 where it is stored. If there is the possibility to transmit the short message to the subscriber associated to the ISDN number being CT9 contained in the short message the short message is transmitted to a fixed subscriber connected to the wireline telecommunication network via the CS node 4.

### Existing relation between the functional number of call type CT7 and a functional number of call type CT8:

However, in case there is a relation between the functional number of call type CT7 and a functional number of call type CT8 stored in the database contained in the MSC 8 the following problem arises. Due to the fact that the short message is converted to a communication in the format of a voice or data communication there is not the possibility to transmit the short message by merely replacing the functional number of call type CT7 by the functional number of call type CT8 and routing the modified functional number to the fixed subscriber associated to the MSISDN number being a functional number of type CT8. The call is routed either to a MRM 3, and presented as a speech call, or to a mobile terminal. This case is handled as previously described.

### External database mobile originated location dependent addressing (MO-eLDA) of short messages:

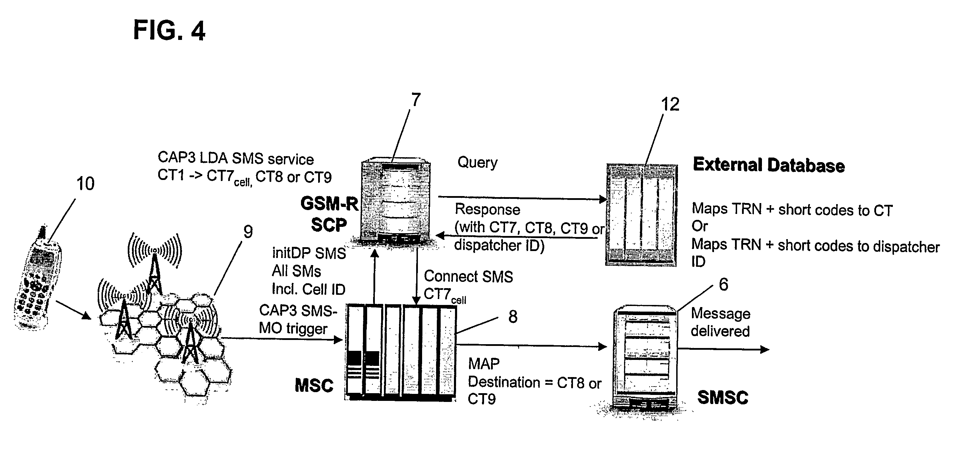

Fig. 4 is a simplified illustration of parts of the wireless GSM-R network and the wireline ISDN network, which illustrates the method for processing so-called mobile originated external database location dependent addressed (eLDA) short messages according to the present invention.

The external database location dependent addressing is mainly based on the aforementioned location dependent addressing and hence merely modifications and additions to the location dependent addressing will be described next.

External database location dependent addressing is performed using an external database 12 in which further data entries are stored in which train running numbers (TRNs), i.e. addresses of call type CT2 and/or short codes, i.e. addresses of call type CT1, are stored in connection with train controller numbers, i.e. addresses of call types CT7, ISDN numbers (i.e. addresses of call type CT9), MSISDN numbers (i.e. addresses of call type CT8), or a dispatcher ID indicating a respective dispatcher which is associated with a respective ISDN number or MSISDN number of a respective short message terminal entity. The external database 12 is a database used for train control in a train control system. Therefore, the external database 12 includes detailed train control information about for example the detailed location of each train. Therefore, such information about the detailed location can be associated to respective train running numbers, i.e. call type CT2.

If a location dependent addressed short message of call type CT1 is transmitted to the mobile switching center 8 the same processing as described above as to location dependent addressing is performed. However, in order to be able to find a suitable fixed subscriber for a respective mobile subscriber the following additional processing steps are performed. If the aforementioned cell ID sent to the SCP 7 is flagged as a train control system controlled area within the SCP 7, the service control point makes a reverse lookup from the calling party MSISDN number to determine one or more potentially calling party functional numbers. Thereafter, the service control point 7 determines a correct calling party functional number based on a priority algorithm. This calling party functional number is then used to extract the calling party train running number, i.e. calling type CT2. The service control point uses the train running number, the cell ID and the called party functional number to query the external database 12. If a appropriate data entry in the external database 12 can be found, the external database 12 resolves the called party functional number to another functional number or it returns a dispatcher ID. The service control point 7 processes the thus obtained functional numbers as already mentioned above and the service control point 7 maps the dispatcher ID into an appropriate physical destination number being an ISDN or MSISDN number, if the dispatcher ID is received. All other processing is identical to the processing already described above. It should be noted that, if the external database is not available, fallback to the above described cell based location dependent addressing is possible.

### Fixed line dispatcher originated short messages:

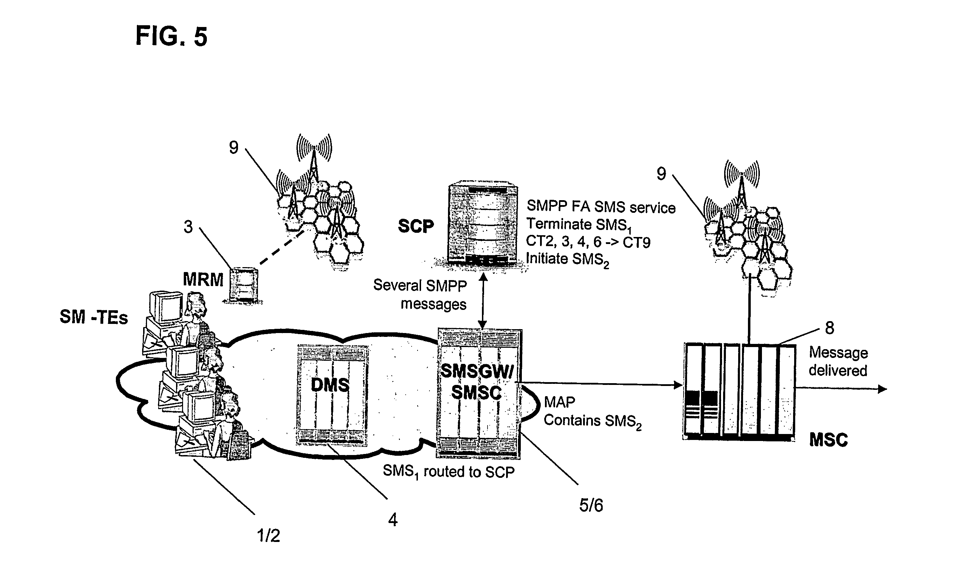

Fig. 5 is a simplified illustration of parts of the wireless GSM-R network and the wireline ISDN network, which illustrates the method for processing fixed subscriber originated short messages according to the present invention.

Whenever the first SM-TEs 1 connected to the wireline ISDN network via the ISDN BRI interface wants to initiate a short message, it establishes an ISDN data call (i.e. bearer capabilities = UDI - Unrestricted Digital Information) over the ISDN interface to the SMGW 5 via a "SETUP" call setup message. It provides its E.164 NSN (National Significant Number) in the CLI field of the SETUP message.

After successful call setup, the first SM-TE 1 establishes a PPP connection towards the SMGW 5. Following, the SMPP protocol can be used to exchange short messages with the SMSC 6 as described in the above-mentioned SMPP v3.4 specification document.

The SMSC 6 provides the main routing engine for SM messages, and is responsible for the triggering of any required address resolution. If a functional addressed short message originating at a fixed subscriber is received at the combined short message gateway/short message service center 5/6 shown in Fig. 5, the SMSC 6 recognizes a called party number as being a functional number of call type CT2, CT3, CT4 or CT6 and submits the message to the service control point 7 via the SMPP protocol. The service control point 7 is only queried from a store and forward perspective. The SMSC 6 remains in full control of the short message and potential retries during malfunction. At the SCP 7 the functional number of the short message is translated to the called party MSISDN or ISDN number. As already mentioned above with respect to functional addressing of mobile originated short messages, the SCP 7 replaces the functional number in the original short message by the thus obtained ISDN or ISDN number and transmits the thus amended short message to the SMSC 6. The SMSC 6 routes the thus amended short message to the destination of the MSISDN or ISDN number.

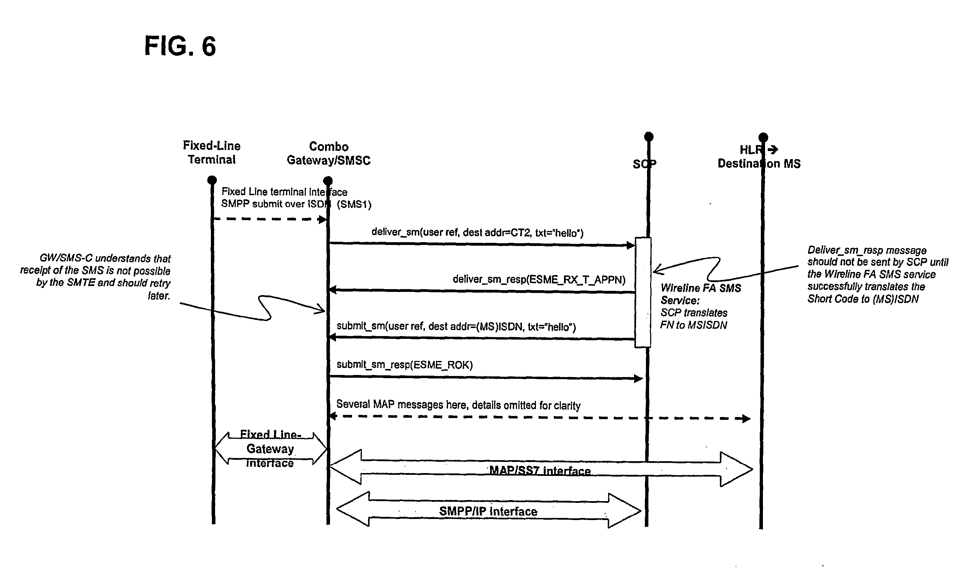

Referring now to Figure 6, shown is a diagram of the SMPP message flow in the case of a dispatcher originated FN addressed SM as described above. In case the called party number is a functional number of type CT2, CT3, CT4 or CT6, a SMPP "deliver_sm" SM delivery message is sent from the SMSC 6 to the SCP 7. Said SM delivery message carries the FN called party number (of type CT2, CT3, CT4 or CT6), for instance in the destination address field. The deliver message also contains a "user_message_reference" parameter reference id, which is unique and generated at the SMSC 6 upon reception of fixed line originated short messages. Responsive to the reception of the SM delivery message, the SCP 7 proceeds with the translation of the FN address extracted from the SM delivery message. If the SCP 7 can successfully complete the FN address translation into an MSISDN or ISDN called party number, it responds to the SM delivery message with a SMPP "deliver_sm_resp" response message that contains a "ESME_RX_T_APPN" error status code notification. The ESME_RX_T_APPN error status code returned by the SCP 7 means that the SCP 7 which acts as an External SM Entity could not process a delivery due to a temporary problem, and requests that the message be retried at some future point. This shall then force the combined SMGW/SMSC 5/6 to schedule a retry. This approach means the SMS-C 6 continues to maintain responsibility for end-to-end delivery of the SM.

The SCP 7 subsequently sends a SMPP "submit_sm" SM submission message that contains the previously received "user_message_reference" reference id, the original source address which remains unchanged, and the MSISDN or ISDN destination number resulting from the successful translation. The SMSC 6 can then identify a pending call through the "user_message_reference" reference id, and overwrite the original short message parameters with the parameters received from the SCP 7 in the "submit_sm" SM submission message. In particular, it will exchange the original short message destination address with the newly received destination address. It can then send a response in the form of a SMPP "submit_sm_resp" response message with a "ESME_ROK" receipt acknowledge notification back to the SCP 7, and sends a new deliver message towards the MAP interface.

If the SCP 7 cannot successfully complete the FN address translation into an MSISDN or ISDN called party number, it responds to the deliver message with a SMPP "deliver_sm_resp" response message that contains a "ESME_RINVDSTADR", i.e. an invalid destination address notification. Subsequent to the reception of such notification, the SMSC 6 considers the short message as non deliverable.

In a preferred embodiment of the invention, the SCP 7 shall not send a response to the initial SM delivery message from the SMSC 6 until the address translation process is complete, should it fail or succeed. This is to prevent the SMSC 6 from sending out the original SM message with a FN as called party number.

Although the present invention has been described in connection with a certain embodiment for illustrative purposes, the present invention is not limited thereto. Accordingly, various modifications, adaptations, and combinations of various features of the described embodiment of the present invention can be practiced without departing from the scope of the present invention as set forth in the claims.

## Claims

1. System for functional addressing and/or location dependent addressing of short messages in a mixed wireless and wireline telecommunication network (9), comprising:
a first network node (8) for receiving a subscriber originated incoming event and for determining whether or not the subscriber originated incoming event is a short message; and
a second network node (5) for, responsive to the first network node (8) determining that said incoming event is a short message, receiving the short message and converting it to a voice or data communication;
**characterized by** first means (4, 8) for receiving the converted short message, for determining whether or not the converted short message contains a functional number, for determining, if the converted short message contains a functional number, whether or not the functional number contained within the converted short message corresponds to a functional number contained within a first database storing predetermined functional numbers in connection with respective call numbers associated with respective fixed subscribers of the mixed wireless and wireline telecommunication network, and for replacing the functional number contained within the converted short message by a respective call number associated with a respective fixed subscriber (1) if it is determined that the functional number contained within the converted short message corresponds to a functional number contained within the first database.

2. System according to claim 1, wherein respective fixed subscribers (1, 2) are connected to a wireless or wireline part of the mixed wireless and wireline telecommunication network (9).

3. System according to claim 1 or 2, comprising second means (7) for determining whether or not a functional number contained within the short message corresponds to a functional number contained within a second database storing predetermined functional numbers in connection with respective call numbers or other functional numbers associated with respective subscribers (10, 11) of the mixed wireless and wireline telecommunication network, for replacing the functional number contained within the short message by a respective call number if it is determined that the functional number contained within the short message corresponds to a functional number contained within the second database in connection with the respective call number associated with a respective subscriber and for replacing the functional number contained within the short message by a respective other functional number if it is determined that the functional number contained within the converted short message corresponds to a functional number contained within the second database in connection with the respective other functional number associated with a respective subscriber.

4. System according to claim 3, wherein the second means (7) is adapted to transmit the short message code containing the respective call number to a subscriber associated therewith and to transmit the short message containing the respective other functional number to the second network node (5).

5. System according to claim 3 or 4, wherein the second means (7) is adapted to perform the determination in accordance with a location information being an information about the location of a specific mobile subscriber (10, 11) within a wireless part of the mixed wireless and wireline telecommunication network (9).

6. System according to claim 5, wherein the location information is an information about a cell ID of a cell of a wireless part of the mixed wireless and wireline telecommunication network (9) in which the mobile subscriber is located.

7. System according to claim 6, wherein the second means (7) is adapted to obtain a specific functional number of the specific mobile user indicating the location of the specific mobile subscriber within the mixed wireless and wireline telecommunication network (9) from a call number of the specific mobile subscriber using a predetermined algorithm.

8. System according to claim 7, wherein the second means (7) is adapted to query an external database (12) by transmitting the specific functional number, the cell ID and a functional number of a fixed subscriber (1, 2) of the mixed wireless and wireline telecommunication network (9) being a call destination to the database and obtaining from the external database (12) an appropriate functional number or an ID, which ID is translated to a call number of an appropriate fixed subscriber within the mixed wireless and wireline telecommunication network (9), and the second means (7) is further adapted to replace the specific functional number of the fixed subscriber of the mixed wireless and wireline telecommunication network by the obtained appropriate functional number or the translated call number of an appropriate fixed subscriber within the mixed wireless and wireline telecommunication network.

9. System according to claim 8, wherein the second means (7) is adapted to transmit the short message containing the obtained appropriate functional number to the second network node (5) and to transmit the short message containing the translated call number to the appropriate fixed subscriber (1, 2) within the mixed wireless and wireline telecommunication network (9).

10. System according to one of the claims I to 9, wherein the mixed wireless and wireline telecommunication network (9) is a mixed GSM/GSM-R or GSM/GSM-R derivative and ISDN telecommunication network.

11. System according to claim 10, wherein the first network node is a mobile switching center (8), the second network node is short message gateway (5), the first means is provided within the mobile switching center (8) or a digital multiplex system (4) connected to the short message gateway (5) and the second means is provided within a service control point (7) connected to the mobile switching center (8) and a short message service center (6).

12. Method for functional addressing and/or location dependent addressing of short messages in a mixed wireless and wireline telecommunication network (9), comprising the steps of:
receiving a subscriber originated incoming event and determining whether or not the subscriber originated incoming event is a short message; and
converting the short message to a voice or data communication if it is determined that the incoming event is a short message;
**characterized by** the step of determining whether or not the converted short message contains a functional number; determining, if the converted short message contains a functional number, whether or not the functional number contained within the converted short message corresponds to a functional number contained within a first database storing predetermined functional numbers in connection with respective call numbers associated with respective fixed subscribers of the mixed wireless and wireline telecommunication network; and replacing the functional number contained within the converted short message by a respective call number associated with a respective fixed subscriber (1, 2) if it is determined that the functional number contained within the converted short message corresponds to a functional number contained within the first database.

13. Method according to claim 12, wherein respective fixed subscribers (1, 2) are connected to a wireless or wireline part of the mixed wireless and wireline telecommunication network (9).

14. Method according to claim 12 or 13, comprising the steps of determining whether or not a functional number contained within the short message corresponds to a functional number contained within a second database storing predetermined functional numbers in connection with respective call numbers or other functional numbers associated with respective subscribers of the mixed wireless and wireline telecommunication network; replacing the functional number contained within the short message by a respective call number if it is determined that the functional number contained within the short message corresponds to a functional number contained within the second database in connection with the respective call number associated with a respective subscriber (10, 11); and replacing the functional number contained within the short message by a respective other functional number if it is determined that the functional number contained within the converted short message corresponds to a functional number contained within the second database in connection with the respective other functional number associated with a respective subscriber.

15. Method according to claim 14, comprising the steps of: transmitting the short message code containing the respective call number to a subscriber associated therewith; and transmitting the short message containing the respective other functional number to the second network node (5).

16. Method according to claim 14 or 15, comprising the step of performing the determination in accordance with a location information being an information about the location of a specific mobile subscriber within a wireless part of the mixed wireless and wireline telecommunication networks (9).

17. Method according to claim 16, wherein the location information is an information about a cell ID of a cell of a wireless part of the mixed wireless and wireline telecommunication network (9) in which the mobile subscriber (10, 11) is located.

18. Method according to claim 17, comprising the step of obtaining a specific functional number of the specific mobile user indicating the location of the specific mobile subscriber within the mixed wireless and wireline telecommunication network from a call number of the specific mobile subscriber using a predetermined algorithm.

19. Method according to claim 18, comprising the steps of: querying an external database (12) by transmitting the specific functional number, the cell ID and a functional number of a fixed subscriber of the mixed wireless and wireline telecommunication network being a call destination to the database; obtaining from the external database (12) an appropriate functional number or an ID, which ID is translated to a call number of an appropriate fixed subscriber within the mixed wireless and wireline telecommunication network; and replacing the specific functional number of the fixed subscriber of the mixed wireless and wireline telecommunication network by the obtained appropriate functional number or the translated call number of an appropriate fixed subscriber within the mixed wireless and wireline telecommunication network (9).

20. Method according to claim 19 wherein the mixed wireless and wireline telecommunication network (9) is a mixed GSM/GSM-R or SM/GSM-R derivative and ISDN telecommunication network.

## Patentansprüche

**1.** System zur funktionalen Adressierung und/oder ortsabhängigen Adressierung von Kurznachrichten in einem gemischten drahtlosen und verdrahteten Telekommonikationsnetz (9) mit:
einem ersten Netzwerkknoten (8) zum Empfang eines ursprünglich von einem Teilnehmer stammenden eintreffenden Ereignisses und zur Entscheidung, ob das ursprünglich von dem Teilnehmer stammende eintreffende Ereignis eine Kurznachricht ist, und
einem zweiten Netzwerkknoten (5), der dazu dient, als Reaktion auf die Entscheidung des ersten Netzwerkknotens (8), daß das genannte eintreffende Ereignis eine Kurznachricht ist, die Kurznachricht zu empfangen und sie in eine Sprach- oder Datenkommunikation umzuwandeln,
**gekennzeichnet durch** eine erste Einrichtung (4, 8) zum Empfang der umgewandelten Kurznachricht, zur Entscheidung, ob die umgewandelte Kurznachricht eine funktionale Nummer enthält oder nicht, zur Entscheidung, wenn die umgewandelte Kurznachricht eine funktionale Nummer enthält, ob die funktionale Nummer, die in der umgewandelten Kurznachricht enthalten ist, einer funktionalen Nummer entspricht oder nicht, die in einer ersten Datenbank enthalten ist, die vorgegebene funktionale Nummern in Verbindung mit jeweiligen Rufnummern speichert, die jeweiligen festen Teilnehmern des gemischten drahtlosen und verdrahteten Telekommunikationsnetzes zugewiesen sind, und zum Ersetzen der funktionalen Nummer, die in der umgewandelten Kurznachricht enthalten ist, **durch** eine jeweilige Rufnummer, die dem jeweiligen festen Teilnehmer (1) zugewiesen ist, wenn festgestellt wird, daß die funktionale Nummer, die in der umgewandelten Kurznachricht enthalten ist, einer funktionalen Nummer entspricht, die in der ersten Datenbank enthalten ist.

**2.** System nach Anspruch 1, bei dem die jeweiligen festen Teilnehmer (1, 2) mit einem drahtlosen oder verdrahteten Teil des gemischten drahtlosen und verdrahteten Telekommunikationsnetzes (9) verbunden sind.

**3.** System nach Anspruch 1 oder 2, mit zweiten Mitteln (7) zur Entscheidung, ob eine funktionale Nummer, die in der Kurznachricht enthalten ist, einer funktionalen Nummer entspricht oder nicht, die in einer zweiten Datenbank enthalten ist, die vorgegebene funktionale Nummern in Verbindung mit jeweiligen Rufnummern oder anderen funktionalen Nummern speichert, die jeweiligen Teilnehmern (10, 11) des gemischten drahtlosen und verdrahteten Telekommunikationsnetzes zugeordnet sind, zum Ersetzen der funktionalen Nummer, die in der Kurznachricht enthalten ist, durch eine jeweilige Rufnummer, wenn entschieden wird, daß die funktionale Nummer, die in der Kurznachricht enthalten ist, einer funktionalen Nummer entspricht, die in der zweiten Datenbank in Verbindung mit der jeweiligen Rufnummer enthalten ist, die einem jeweiligen Teilnehmer zugeordnet ist, und zum Ersetzen der funktionalen Nummer, die in der Kurznachricht enthalten ist, durch eine jeweilige andere funktionale Nummer, wenn entschieden wird, daß die funktionale Nummer, die in der Kurznachricht enthalten ist, einer funktionalen Nummer entspricht, die in der zweiten Datenbank in Verbindung mit der jeweiligen anderen funktionalen Nummer enthalten ist, die einem jeweiligen Teilnehmer zugeordnet ist.

**4.** System nach Anspruch 3, bei dem die zweiten Mittel (7) dazu eingerichtet sind, den Code der Kurznachricht, der die betreffende Rufnummer enthält, an einen Teilnehmer zu übermitteln, der ihr zugeordnet ist, und die Kurznachricht, die die jeweilige andere funktionale Nummer enthält, an den zweiten Netzwerkknoten (5) zu übermitteln.

**5.** System nach Anspruch 3 oder 4, bei dem die zweiten Mittel (7) dazu eingerichtet sind, die Entscheidung in Übereinstimmung mit einer Ortsinformation vorzunehmen, bei der es sich um eine Information über den Ort eines bestimmten mobilen Teilnehmers (10, 11) innerhalb des drahtlosen Teils des gemischten drahtlosen und verdrahteten Telekommunikationsnetzes (9) handelt.

**6.** System nach Anspruch 5, bei dem die Ortsinformation eine Information über eine Zellenkennung einer Zelle eines drahtlosen Teils des gemischten drahtlosen und verdrahteten Telekommunikationsnetzes ist, in er sich der mobile Teilnehmer aufhält.

**7.** System nach Anspruch 6, bei dem die zweiten Mittel (7) dazu eingerichtet sind, anhand einer Rufnummer des bestimmten mobilen Teilnehmers unter Verwendung eines vorbestimmten Algorithmus eine bestimmte funktionale Nummer des bestimmten mobilen Teilnehmers zu gewinnen, die den Ort des bestimmten mobilen Teilnehmers innerhalb des gemischten drahtlosen und verdrahteten Telekommunikationsnetzes (9) angibt.

**7.** System nach Anspruch 7, bei dem die zweiten Mittel (7) dazu eingerichtet sind, eine externe Datenbank (12) zu befragen, durch Übermittlung der bestimmten funktionalen Nummer, der Zellenkennung und einer funktionalen Nummer eines festen Teilnehmers (1, 2) des gemischten drahtlosen und verdrahteten Telekommunikationsnetzes (9), die ein Rufziel bildet, an die Datenbank, und aus der externen Datenbank (12) eine geeignete funktionale Nummer oder eine Kennung zu gewinnen, wobei die Kennung in eine Rufnummer eines geeigneten festen Teilnehmers innerhalb des gemischten drahtlosen und verdrahteten Telekommunikationsnetzes (9) übersetzt wird, und die zweiten Mittel (7) weiterhin dazu eingerichtet sind, die bestimmte funktionale Nummer des festen Teilnehmers des gemischten drahtlosen und verdrahteten Telekommunikationsnetzes durch die erhaltene geeignete funktionale Nummer oder die übersetzte Rufnummer eines geeigneten festen Teilnehmers innerhalb des gemischten drahtlosen und verdrahteten Telekommunikationsnetzes zu ersetzen.

**9.** System nach Anspruch 8, bei dem die zweiten Mittel (7) dazu eingerichtet sind, die Kurznachricht, die die erhaltene geeignete funktionale Nummer enthält, an den zweiten Netzwerkknoten (5) zu übermitteln und die Kurznachricht, die die übersetzte Rufnummer enthält, an den geeigneten festen Teilnehmer (1, 2) in dem gemischten drahtlosen und verdrahteten Telekommunikationsnetz (9) zu übermitteln.

**10.** System nach einem der Ansprüche 1 bis 9, bei dem das gemischte drahtlose und verdrahtete Telekommunikationsnetz (9) ein gemischtes GSM/GSM-R oder GSM/GSM-R-Derivat und ISDN Telekommunikationsnetz ist.

**11.** System nach Anspruch 10, bei dem der erste Netzwerkknoten eine mobile Vermittlungszentrale (8) ist, der zweite Netzwerkknoten ein Gateway (5) für Kurznachrichten ist, die ersten Mittel in der mobilen Vermittlungszentrale (8) oder einen digitalen Multiplexsystem (4) vorgesehen sind, das mit dem Gateway (5) für Kurznachrichten verbunden ist, und die zweiten Mittel in einen Servicekontrollpunkt (7) vorgesehen sind, der mit der mobilen Vermittlungszentrale (8) und einem Servicezentrum (6) für Kurznachrichten verbunden ist.

**12.** Verfahren zur funktionalen Adressierung und/oder ortsabhängigen Adressierung von Kurznachrichten in einem gemischten drahtlosen und verdrahteten Telekommunikationsnetz (9) mit den Schritten:
Empfangen eines ursprünglich von einem Teilnehmer stammenden eintreffenden Ereignisses und Entscheiden, ob das ursprünglich von dem Teilnehmer stammende eintreffende Ereignis eine Kurznachricht ist oder nicht, und
Umwandeln der Kurznachricht in eine Sprach- oder Datenkommunikation, wenn festgestellt wird, daß das eintreffende Ereignis eine Kurznachricht ist,
**gekennzeichnet durch** den Schritt der Entscheidung, ob die umgewandelte Kurznachricht eine funktionale Nummer enthält, der Entscheidung, wenn die umgewandelte Kurznachricht eine funktionale Nummer enthält, ob die funktionale Nummer, die in der umgewandelten Kurznachricht enthalten ist, einer funktionalen Nummer entspricht oder nicht, die in einer ersten Datenbank enthalten ist, die vorbestimmte funktionale Nummern in Verbindung mit jeweiligen Rufnummern speichert, die jeweiligen festen Teilnehmern des gemischten drahtlosen und verdrahteten Telekommunikationsnetzes zugewiesen sind, und des Ersetzens der funktionalen Nummer, die in der umgewandelten Kurznachricht enthalten ist, **durch** eine jeweilige Rufnummer, die einem jeweiligen festen Teilnehmer (1, 2) zugeordnet ist, wenn festgestellt wird, daß die funktionale Nummer, die in der umgewandelten Kurznachricht enthalten ist, einer funktionalen Nummer entspricht, die in der ersten Datenbank enthalten ist.

**13.** Verfahren nach Anspruch 12, bei dem die jeweiligen festen Teilnehmer (1, 2) mit einem drahtlosen oder verdrahteten Teil des gemischten drahtlosen und verdrahteten Telekommunikationsnetzes (9) verbunden sind.

**14.** Verfahren nach Anspruch 12 oder 13, mit den Schritten der Entscheidung, ob eine funktionale Nummer, die in der Kurznachricht enthalten ist, einer funktionalen Nummer entspricht oder nicht, die in einer zweiten Datenbank enthalten ist, die vorbestimmte funktionale Nummern in Verbindung mit jeweiligen Rufnummern oder anderen funktionalen Nummern speichert, die jeweiligen Teilnehmern des gemischten drahtlosen und verdrahteten Telekommunikationsnetzes zugeordnet sind, des Ersetzens der funktionalen Nummer, die in der Kurznachricht enthalten ist, durch eine jeweilige Rufnummer, wenn festgestellt wird, daß die funktionale Nummer, die in der Kurznachricht enthalten ist, einer funktionalen Nummer entspricht, die in der zweiten Datenbank in Verbindung mit der jeweiligen Rufnummer enthalten ist, die einem jeweiligen Teilnehmer (10, 11) zugeordnet ist, und des Ersetzens der funktionalen Nummer, die in der Kurznachricht enthalten ist, durch eine jeweilige andere funktionale Nummer, wenn festgestellt wird, daß die funktionale Nummer, die in der umgewandelten Kurznachricht enthalten ist, einer funktionalen Nummer entspricht, die in der zweiten Datenbank in Verbindung mit der jeweiligen anderen funktionalen Nummer enthalten ist, die einem jeweiligen Teilnehmer zugeordnet ist.

**15.** Verfahren nach Anspruch 14, mit den Schritten: Übermitteln des Codes der Kurznachricht, der die jeweilige Rufnummer enthält, an einen ihr zugeordneten Teilnehmer, und Übermitteln der Kurznachricht, die die jeweilige andere funktionale Nummer enthält, an den zweiten Netzwerkknoten (5).

**16.** Verfahren nach Anspruch 14 oder 15, mit dem Schritt der Ausführung der Entscheidung in Übereinstimmung mit einer Ortsinformation, bei der es sich um eine Information über den Ort eines bestimmten mobilen Teilnehmers innerhalb eines drahtlosen Teils des gemischten drahtlosen und verdrahteten Telekommunikationsnetzes (9) handelt.

**17.** Verfahren nach Anspruch 16, bei dem die Ortsinformation eine Information über eine Zellenkennung einer Zelle eines drahtlosen Teils des gemischten drahtlosen und verdrahteten Telekommunikationsnetzes (9) ist, in der der mobile Teilnehmer (10, 11) sich aufhält.

**18.** Verfahren nach Anspruch 17, mit dem Schritt der Gewinnung einer bestimmten funktionalen Nummer des bestimmten mobilen Benutzers, die den Ort des bestimmten mobilen Teilnehmers innerhalb des gemischten drahtlosen und verdrahteten Telekommunikationsnetzes angibt, unter Verwendung eines vorbestimmten Algorithmus anhand einer Rufnummer des bestimmten mobilen Teilnehmers.

**19.** Verfahren nach Anspruch 18, mit den Schritten: Befragen einer externen Datenbank (12) durch Übermittlung der bestimmten funktionalen Nummer, der Zellenkennung und einer funktionalen Nummer eines festen Teilnehmers des gemischten drahtlosen und verdrahteten Telekommunikationsnetzes, die ein Rufziel bildet, an die Datenbank, Gewinnen, aus der externen Datenbank (12), einer geeigneten funktionalen Nummer oder einer Kennung, wobei die Kennung in eine Rufnummer eines geeigneten festen Teilnehmers in dem gemischten drahtlosen und verdrahteten Telekommunikationsnetz übersetzt wird, und Ersetzen der bestimmten funktionalen Nummer des festen Teilnehmers des gemischten drahtlosen und verdrahteten Telekommunikationsnetzes durch die erhaltene geeignete funktionale Nummer oder die übersetzte Rufnummer eines geeigneten festen Teilnehmers in dem gemischten drahtlosen und verdrahteten Telekommunikationsnetz (9).

**20.** Verfahren nach Anspruch 19, bei dem das gemischte drahtlose und verdrahtete Telekommunikationsnetz (9) ein gemischtes GSM/GSM-R oder GSM/GSM-R-Derivat und ISDN Telekommunikationsnetz ist.

## Revendications

1. Système pour l'adressage fonctionnel et/ou l'adressage en fonction de la position de messages courts dans un réseau de télécommunication hybride sans fil-filaire (9) comportant :
un premier noeud de réseau (8) pour recevoir un évènement entrant émanant d'un abonné et pour déterminer si oui ou non l'événement entrant émanant d'un abonné est un message court, et
un second noeud de réseau (5) pour, en réponse au premier noeud de réseau (8) déterminant que l'événement entrant émanant d'un abonné est un message court, recevoir le message court et convertir celui-ci en une communication vocale ou de données,
**caractérisé par** des premiers moyens (4, 8) pour recevoir le message court converti, pour déterminer si oui ou non le message court converti contient un numéro fonctionnel, pour déterminer, si le message court converti contient un numéro fonctionnel, si oui ou non le numéro fonctionnel contenu dans le message court converti correspond à un numéro fonctionnel contenu dans une première base de données mémorisant des numéros fonctionnels prédéterminés en association avec des numéros d'appel respectifs associés à des abonnés fixes respectifs du réseau de télécommunication hybride sans fil-filaire, et pour remplacer le numéro fonctionnel contenu dans le message court converti par un numéro d'appel respectif associé à un abonné fixe respectif (1) si il est déterminé que le numéro fonctionnel contenu dans le message court converti correspond à un numéro fonctionnel contenu dans la première base de données.

2. Système selon la revendication 1, dans lequel des numéros fixes respectifs (1, 2) sont connectés à une partie sans fil ou filaire du réseau de télécommunication hybride sans fil-filaire (9).

3. Système selon la revendication 1 ou 2, comportant des seconds moyens (2) pour déterminer si oui ou non un numéro fonctionnel contenu dans le message court correspond à un numéro fonctionnel contenu dans une seconde base de données mémorisant des numéros fonctionnels prédéterminés en association avec des numéros d'appel respectifs ou d'autres numéros fonctionnels associés aux abonnés respectifs (10, 11) du réseau de télécommunication hybride sans fil-filaire, pour remplacer le numéro fonctionnel contenu dans le message court par un numéro d'appel respectif si il est déterminé que le numéro fonctionnel contenu dans le message court correspond à un numéro fonctionnel contenu dans la seconde base de données en association avec le numéro d'appel respectif associé à un abonné respectif et pour remplacer le numéro fonctionnel contenu dans le message court par un autre numéro fonctionnel respectif si il est déterminé que le numéro fonctionnel contenu dans le message court converti correspond à un numéro fonctionnel contenu dans la seconde base de données en association avec l'autre numéro fonctionnel respectif associé à un abonné respectif.

4. Système selon la revendication 3, dans lequel les seconds moyens (7) sont adaptés pour transmettre le code de message court contenant le numéro d'appel respectif à un abonné associé à celui-ci et pour transmettre le message court contenant l'autre numéro fonctionnel respectif au second noeud de réseau (5).

5. Système selon la revendication 3 ou 4, dans lequel les seconds moyens (7) sont adaptés pour effectuer la détermination conformément à une information de position étant une information concernant la position d'un abonné mobile spécifique (10, 11) dans une partie sans fil du réseau de télécommunication hybride sans fil-filaire (9).

6. Système selon la revendication 5, dans lequel l'information de position est une information concernant un ID de cellule d'une cellule d'une partie sans fil du réseau de télécommunication hybride sans fil-filaire (9) dans laquelle l'abonné mobile est localisé.

7. Système selon la revendication 6, dans lequel les seconds moyens (7) sont adaptés pour obtenir un numéro fonctionnel spécifique de l'utilisateur mobile spécifique indiquant la position de l'abonné mobile spécifique dans le réseau de télécommunication hybride sans fil-filaire (9) à partir d'un numéro d'appel de l'abonné mobile spécifique en utilisant un algorithme prédéterminé.

8. Système selon la revendication 7, dans lequel les seconds moyens (7) sont adaptés pour interroger une base de données externe (12) en transmettant le numéro fonctionnel spécifique, l'ID de cellule et un numéro fonctionnel d'un abonné fixe (1, 2) du réseau de télécommunication hybride sans fil-filaire (9) étant une destination d'appel à la base de données et obtenir depuis la base de données externe (12) un numéro fonctionnel ou un ID approprié, lequel ID est traduit en un numéro d'appel d'un abonné fixe approprié dans le réseau de télécommunication hybride sans fil-filaire (9), et les seconds moyens (7) sont en outre adaptés pour remplacer le numéro fonctionnel spécifique de l'abonné fixe du réseau de télécommunication hybride sans fil-filaire par le numéro fonctionnel approprié obtenu ou le numéro d'appel traduit d'un abonné fixe approprié dans le réseau de télécommunication hybride sans fil-filaire.

9. Système selon la revendication 8, dans lequel les seconds moyens (7) sont adaptés pour transmettre le message court contenant le numéro fonctionnel approprié obtenu au second noeud de réseau (5) et pour transmettre le message court contenant le numéro d'appel traduit à l'abonné fixe approprié (1, 2) dans le réseau de télécommunication hybride sans fil-filaire (9).

10. Système selon l'une quelconque des revendications 1 à 9, dans lequel le réseau de télécommunication hybride sans fil-filaire (9) est un réseau GSM/GSM-R hybride ou GSM/GSM-R dérivatif et un réseau de télécommunication RNIS;

11. Système selon la revendication 10, dans lequel le premier noeud de réseau est un centre de commutation mobile (8) , le second noeud de réseau est une passerelle de message court (5), les premiers moyens sont agencés dans le centre de commutation mobile (8) ou un système multiplex numérique (4) connecté à la passerelle de message court (5) et les seconds moyens sont agencés dans un point de commande de services-réseau (7) connecté au centre de commutation mobile et à un centre de service de message court (6).

12. Procédé pour l'adressage fonctionnel et/ou l'adressage en fonction de la position de messages courts dans un réseau de télécommunication hybride sans fil-filaire (9) comportant les étapes consistant à :
recevoir un évènement entrant émanant d'un abonné et déterminer si oui ou non l'évènement entrant émanant d'un abonné est un message court, et
convertir le message court en une communication vocale ou de données si il est déterminé que l'évènement entrant est un message court,
**caractérisé par** l'étape consistant à déterminer si oui ou non le message court converti contient un numéro fonctionnel, à déterminer, si le message court converti contient un numéro fonctionnel, si oui ou non le numéro fonctionnel contenu dans le message court converti correspond à un numéro fonctionnel contenu dans une première base de données mémorisant des numéros fonctionnels prédéterminés en association avec des numéros d'appel respectifs associés à des abonnés fixes respectifs du réseau de télécommunication hybride sans fil-filaire, et remplacer le numéro fonctionnel contenu dans le message court converti par un numéro d'appel respectif associé à un abonné fixe respectif (1) si il est déterminé que le numéro fonctionnel contenu dans le message court converti correspond à un numéro fonctionnel contenu dans la première base de données.

13. Procédé selon la revendication 12, dans lequel des numéros fixes respectifs (1, 2) sont connectés à une partie sans fil ou filaire du réseau de télécommunication hybride sans fil-filaire (9).

14. Procédé selon la revendication 12 ou 13, comportant les étapes consistant à déterminer si oui ou non un numéro fonctionnel contenu dans le message court correspond à un numéro fonctionnel contenu dans une seconde base de données mémorisant des numéros fonctionnels prédéterminés en association avec des numéros d'appel respectifs ou d'autres numéros fonctionnels associés aux abonnés respectifs du réseau de télécommunication hybride sans fil-filaire, à remplacer le numéro fonctionnel contenu dans le message court par un numéro d'appel respectif si il est déterminé que le numéro fonctionnel contenu dans le message court correspond à un numéro fonctionnel contenu dans la seconde base de données en association avec le numéro d'appel respectif associé à un abonné respectif (10, 11) et à remplacer le numéro fonctionnel contenu dans le message court par un autre numéro fonctionnel respectif si il est déterminé que le numéro fonctionnel contenu dans le message court converti correspond à un numéro fonctionnel contenu dans la seconde base de données en association avec l'autre numéro fonctionnel respectif associé à un abonné respectif.

15. Procédé selon la revendication 14, comportant les étapes consistant à : transmettre le code de message court contenant le numéro d'appel respectif à un abonné associé à celui-ci, et transmettre le message court contenant l'autre numéro fonctionnel respectif au second noeud de réseau (5).

16. Système selon la revendication 14 ou 15, comportant l'étape consistant effectuer la détermination conformément à une information de position étant une information concernant la position d'un abonné mobile spécifique dans une partie sans fil du réseau de télécommunication hybride sans fil-filaire (9).

17. Procédé selon la revendication 16, dans lequel l'information de position est une information concernant un ID de cellule d'une cellule d'une partie sans fil du réseau de télécommunication hybride sans fil-filaire (9) dans laquelle l'abonné mobile est localisé.

18. Procédé selon la revendication 17, comportant l'étape consistant à obtenir un numéro fonctionnel spécifique de l'utilisateur mobile spécifique indiquant la position de l'abonné mobile spécifique dans le réseau de télécommunication hybride sans fil-filaire à partir d'un numéro d'appel de l'abonné mobile spécifique en utilisant un algorithme prédéterminé.

19. Procédé selon la revendication 18, comportant les étapes consistant à : interroger une base de données externe (12) en transmettant le numéro fonctionnel spécifique, l'ID de cellule et un numéro fonctionnel d'un abonné fixe du réseau de télécommunication hybride sans fil-filaire étant une destination d'appel à la base de données, et obtenir depuis la base de données externe (12) un numéro fonctionnel ou un ID approprié, lequel ID est traduit en un numéro d'appel d'un abonné fixe approprié dans le réseau de télécommunication hybride sans fil-filaire, et remplacer le numéro fonctionnel spécifique de l'abonné fixe du réseau de télécommunication hybride sans fil-filaire par le numéro fonctionnel approprié obtenu ou le numéro d'appel traduit d'un abonné fixe approprié dans le réseau de télécommunication hybride sans fil-filaire (9).

20. Procédé selon la revendication 19, dans lequel le réseau de télécommunication hybride sans fil-filaire (9) est un réseau GSM/GSM-R hybride ou GSM/GSM-R dérivatif et un réseau de télécommunication RNIS.
